# EUROPEAN PATENT SPECIFICATION

(11) **EP 3 248 408 B1**
(45) Date of publication and mention of the grant of the patent: **09.01.2019**
(21) Application number: 15741618.1
(22) Date of filing: 01.07.2015
(51) Int. Cl.: H04W 24/10

(54) **METHOD AND APPARATUSES FOR ADAPTIVE CONTROL OF USER EQUIPMENT MEASUREMENTS**
VERFAHREN UND VORRICHTUNG ZUR ADAPTIVEN STEUERUNG VON BENUTZERGERÄTEMESSUNGEN
PROCÉDÉ ET APPAREILS POUR LA COMMANDE ADAPTATIVE DE MESURES D'ÉQUIPEMENT D'UTILISATEUR

(30) Priority: 22.01.2015 US 201562106367 P
(43) Date of publication of application: 29.11.2017
(73) Proprietor: Telefonaktiebolaget LM Ericsson (PUBL), 164 83 Stockholm (SE)
(72) Inventor: CALLENDER, Christopher, Kinross KY13 0LW (GB); CHAPMAN, Thomas, SE-171 50 Solna (SE); ZIRÉN, Mikael, SE-244 36 Kävlinge (SE)
(74) Representative: Zacco Sweden AB
(86) International application number: PCT/SE2015/050774
(87) International publication number: WO 2016/118059

(56) References cited:
- WO-A1-2013/144433
- WO-A1-2014/177186
- US-A1- 2012 281 563
- US-A1- 2013 208 610

## Description

### TECHNICAL FIELD

This disclosure generally relates to radio communication. More particularly, this disclosure presents a method and apparatuses for adaptively controlling user equipment (UE) measurements.

### BACKGROUND

Radio communication networks are widely deployed to provide various communication services such as telephony, video, data, messaging, broadcasts, and so on. Such communication networks support communications for multiple UEs by sharing the available network resources. One example of such a network is the Universal Mobile Telecommunications System (UMTS), a third generation (3G) mobile phone technology standardized by the 3rd Generation Partnership Project (3GPP). UMTS includes a definition for a Radio Access Network (RAN), referred to as UMTS Terrestrial Radio Access Network (UTRAN). The UMTS, which is the successor to Global System for Mobile Communications (GSM) technologies, supports various air interface standards, such as Wideband-Code Division Multiple Access (W-CDMA), Time Division-Code Division Multiple Access (TD-CDMA), and Tie Division-Synchronous Code Division Multiple Access (TD-SCDMA). The UMTS also supports enhanced 3G data communications protocols, such as High Speed Packet Access (HSPA), which provides higher data transfer speeds and capacity to associated UMTS networks. As the demand for mobile broadband access continues to increase, research and development continue to advance the UMTS technologies not only to meet the growing demand for mobile broadband access, but to advance and enhance the user experience with mobile communications. For example, third-generation UMTS based on W-CDMA has been deployed in many places the world. To ensure that this system remains competitive in the future, 3GPP began a project to define the long-term evolution of UMTS cellular technology. The specifications related to this effort are formally known as Evolved UMTS Terrestrial Radio Access (E-UTRA) and Evolved UMTS Terrestrial Radio Access Network (E-UTRAN), but are more commonly referred to by the name Long Term Evolution (LTE). More detailed descriptions of radio communication networks and systems can be found in literature, such as in Technical Specifications published by, e.g., the 3GPP. The core network (CN) of the evolved network architecture is sometimes referred to as Evolved Packet Core (EPC) and when referring to a complete cellular system, including both radio access network and core network, as well as other possible entities, such as service related entities, the term Evolved Packet System (EPS) can be used.

Various features have been introduced in 3GPP specifications to enable UE power saving, such as Discontinuous Reception (DRX) and Discontinuous Transmission (DTX) in different Radio Resource Control (RRC) states.

A number of so-called RRC states exist, known as CELL_DCH (Dedicated Channel), CELL_FACH (Forward access channel), CELL_PCH (Cell Paging channel), URA_PCH (URA Paging channel, where URA is an abbreviation for UTRAN Registration Area) and idle mode. In general, the idle mode (i.e., no connection, or no connectivity) has the lowest energy consumption. The states in the connected mode, in order of decreasing power consumption, are CELL_DCH, CELL_FACH, CELL_PCH and URA_PCH.

The above-mentioned RRC states are differentiated by, among other things, the amount of interaction between the UE and the network. CELL_FACH has a more reduced amount of interaction with the network than CELL_PCH, since the UE does not transmit continuously. This enables the UE power consumption to be reduced when the UE is in CELL_FACH compared to CELL_DCH. In 3GPP Release 99 CELL_FACH; the UE receiver must be continuously switched on, whereas idle mode and CELL_PCH enable the UE receiver to be switched off for certain periods of time. In order to further improve the efficiency of CELL_FACH, enhancements were introduced in 3GPP Releases 8 and 9, such as DRX. The UE is able to switch off its receiver also in CELL_FACH for some of the time, thus improving power consumption. However, the UE receiver would still need to be (or benefit from being) switched on for a longer period of time than is the case in idle mode. In 3GPP release 11, CELL_FACH was therefore enhanced further through the introduction of a second DRX cycle, which may reduce the UE receiver activity levels to be relatively similar to the idle mode. In power efficient states, the power used to perform UE measurements such as mobility measurements in radio frequency (RF) and baseband circuits becomes relatively large. It is also desirable to introduce power efficient measurement procedures in these states.

Measurement power consumption may be reduced by taking less frequent measurement samples. Individual measurement samples may e.g. be filtered by a so called Layer 1 (L1) measurement filter, before the measurement result is passed to the higher layers of the protocol stack. An example of a L1 measurement filter would be to maintain an N-sample running average of the measurement samples, where N is the number of samples.

From a standardization perspective, the raw measurement sample rate is not specified, but a requirement on the maximum allowable measurement period is specified along with a corresponding measurement accuracy requirement.

If it is desired that a UE measures less frequently to save power, then the implications may be any one of the following: i) the measurement period may need to be extended (which would then allow to maintain the number of samples, N, within the measurement period) or ii) the accuracy may need to be relaxed (which would then allow the UE implementation to reduce the number N of samples within the measurement period). These approaches are not mutually exclusive, so it is possible to both extend the measurement period and relax the accuracy requirement.

In CELL_DCH, mobility may be managed by the network to provide handover and seamless call mobility. In order for the network to effectively manage mobility so that handovers are made in a timely fashion, in idle mode, mobility is executed by means of UE based cell reselection and there is no need to maintain strict call continuity (since there is no call ongoing). The accuracy requirements for mobility related measurements are generally higher when the UE is in a CELL_DCH state than in idle mode, since in idle mode there is generally less need for accuracy but a greater need for power saving. The measurement accuracy requirement for CELL_FACH is generally the same as for CELL_DCH. However it is not apparent that with long DRX cycles and low activity in CELL_FACH, the measurement accuracy needs to be as high as in CELL_DCH.

When a second DRX cycle was introduced for cell FACH state in UTRA 3GPP Release 11, an extended measurement duration was specified. The intention was to enable similar power consumption for mobility measurements with long DRX in cell FACH state as for the idle mode. To achieve this, the requirement for the duration within which measurements are completed in cell FACH was extended in a way that becomes comparable with the idle mode measurement evaluation period requirements. However, the accuracy requirements in CELL_FACH state are specified to be tighter than the implied accuracy requirements in idle mode. Therefore, a UE would still need to consume more power for the mobility measurements in CELL_FACH state than is the case in idle mode, since more measurements samples are acquired by the UE in order to achieve higher accuracy.

WO 2013/144433 A1 discloses a UE performing measurements, the accuracy of which depends on whether the UE is or not in a DRX state.

US 2013/208610 A1 discloses a system to control the collection and reporting of measurement data in a communication system.

US 2012/281563 A1 discloses a method for determining different measurement modes for different RATs.

### SUMMARY

It is in view of the above considerations and others that the various embodiments disclosed herein have been made.
It is a general object to provide an adaptive control of UE measurements. This object is addressed by the independent claims described herein. In one of its aspects, and according to embodiments herein there is provided a method of adaptively controlling UE measurements based on the UEs activity level. The method comprising: determining whether an UE is in connected mode or in idle mode.
In response to determining that said UE is in connected mode, the method further comprising: determining whether an UE activity level of said UE represents a first activity level or a second activity level; the determining of the activity level of the UE including determining whether the UE is in a dedicated channel, DCH, state or a forward access channel, FACH, state and adapting a quality level at which the UE measurements are performed based on the determined activity level.
The first activity level may correspond to a high activity level. The second activity level may correspond to a low activity level. In other words, the first activity level is comparatively higher than the second activity level. The first activity level corresponds to a state where discontinuous reception (DRX) is not applied, and the second activity level corresponds to a state where discontinuous reception is applied.
In some embodiments, the method further comprises: in response to determining that the UE activity level of said UE represents the first activity level, adapting (or, adopting) the UE measurements to a first quality level corresponding to a first performance level; and in response to determining that the UE activity level of said UE represents the second activity level, adapting (or, adopting) the UE measurements to a second quality level corresponding to a second performance level, wherein the second quality level is a quality level which is comparatively lower than the first quality level.

In some embodiments, the quality level comprises an intensity level of the UE measurements. For instance, the method may additionally comprise: in response to determining that the UE activity level of said UE represents the first activity level, adapting (or, adopting) the UE measurements to a first intensity level; and in response to determining that the UE activity level of said UE represents the second activity level, adapting (or, adopting) the UE measurements to a second intensity level, wherein the second intensity level is comparatively lower than the first intensity level.

In some embodiments, the quality level comprises an accuracy level of the UE measurements. For instance, the method may additionally comprise: in response to determining that the UE activity level of said UE represents the first activity level, adapting (or, adopting) the UE measurements to a first accuracy level; and in response to determining that the UE activity level of said UE represents the second activity level, adapting (or, adopting) the UE measurements to a second accuracy level, wherein the second accuracy level is comparatively lower than the first accuracy level.

In some embodiments, determining whether the UE activity level of said UE represents a first activity level or a second activity level comprises: comparing the UE activity level of said UE with a predefined threshold activity level; determining that the UE activity level represents the first activity level in response to the UE activity level of said UE being above the predefined threshold activity level; and determining that the UE activity level represents the second activity level in response to the UE activity level of said UE being below or equal to the predefined threshold activity level.

For example, the method may be performed by said UE. If so, the method may also comprise performing UE measurements at the adapted quality level; and transmitting a message to a network node e.g. a radio base station or eNodeB or eNB, wherein said message comprises information or otherwise indicates a result from the performed UE measurements.

Alternatively, the method may be performed by a network node. If so, the method may also comprise: transmitting a message to said UE, the message including an instruction to the UE to adapt the quality level at which the UE measurements are performed; and receiving a message from the UE, wherein said message comprises information or otherwise indicates a result from the performed UE measurements.
In another of its aspects, the technology presented herein concerns a computer program comprising instructions which when executed on at least one processor of an apparatus causes the apparatus to perform, or execute, a method according described above.. A carrier comprising the computer program is also provided. The carrier may e.g. be one of an electronic signal, an optical signal, a radio signal, or a computer readable storage medium.
In still another of its aspects, the technology presented herein concerns an apparatus for adaptively controlling UE measurements. The apparatus comprises a processor and a memory, wherein the memory comprises instructions executable by the processor whereby the apparatus is operative to: determine whether the UE is in connected mode or in idle mode; and in response to determining that said UE is in connected mode, the apparatus is further operative to: determine whether an UE activity level of said UE represents a first activity level or a second activity level; the determining of the activity level of the UE including determining whether the UE is in a dedicated channel, DCH, state or a forward access channel, FACH, state; and adapt a quality level at which the UE measurements are performed based on the determined activity level.
The first activity level may correspond to a high activity level. The second activity level may correspond to a low activity level. The first activity level corresponds to a state where discontinuous reception (DRX) is not applied, and the second activity level corresponds to a state where discontinuous reception is applied.

In some embodiments, the memory comprises instructions executable by the processor whereby the apparatus is operative to: in response to determining that the UE activity level of said UE represents the first activity level, adapt the UE measurements to a first quality level corresponding to a first performance level; and in response to determining that the UE activity level of said UE represents the second activity level, adapt the UE measurements to a second quality level corresponding to a second performance level, wherein the second quality level is a quality level which is comparatively lower than the first quality level.

In some embodiments, the quality level comprises an intensity level of the UE measurements. For instance, the memory may comprise instructions executable by the processor whereby the apparatus is operative to: in response to determining that the UE activity level of said UE represents the firstfirst activity level, adapt the UE measurements to a first intensity level; and in response to determining that the UE activity level of said UE represents the second activity level, adapt the UE measurements to a second intensity level, wherein the second intensity level is comparatively lower than the first intensity level.

In some embodiments, the quality level comprises an accuracy level of the UE measurements. For instance, the memory may comprise instructions executable by the processor whereby the apparatus is operative to: in response to determining that the UE activity level of said UE represents the first activity level, adapt the UE measurements to a first accuracy level; and in response to determining that the UE activity level of said UE represents the second activity level, adapt the UE measurements to a second accuracy level, wherein the second accuracy level is comparatively lower than the first accuracy level.

In some embodiments, the memory comprises instructions executable by the processor whereby the apparatus is operative to: compare an UE activity level of said UE with a predefined threshold activity level; determine that the UE activity level represents the first activity level in response to the UE activity level of said UE being above the predefined threshold activity level; and determine that the UE activity level represents the second activity level in response to the UE activity level of said UE being below or equal to the predefined threshold activity level.

In one embodiment, the apparatus is said UE. If so, the memory may additionally comprise instructions executable by the processor whereby the UE is operative to: perform UE measurements at the adapted quality level; and transmit a message to a network node, wherein said message comprises information or otherwise indicates a result from the performed UE measurements.

In an alternative embodiment, the apparatus is a network node. If so, the memory may comprise instructions executable by the processor whereby the UE is operative to: transmit a message to said UE, the message including an instruction to the UE to adapt the quality level at which the UE measurements are performed; and receive a message from the UE, wherein said message comprises information or otherwise indicates a result from the performed UE measurements.

Various embodiments described herein provide for an adaptive control of UE measurements. An adaptive control of the UE measurements may have several advantages. For example, it is made possible to limit, or reduce, the power consumption of the UE.

According to exemplary embodiments, the UE measurement requirement may be based on the data activity level of the UE. For example UEs which are more active in receiving data (i.e., having a high data activity level) may benefit from accurate measurements of a serving radio cell as well as neighboring radio cells, whereas for UEs which are less active in receiving data, less accurate measurements may be required. Accordingly, embodiments herein provide solutions on how to determine the measurement requirement based on the UEs activity level, e.g.
- UE which are more active in receiving data perform more accurate measurements of serving and neighbor cells.
- For UE which are less active in receiving data, less accurate measurements are required.

Less accurate measurement requirements in a low connectivity state may for example be feasible due to that measurement accuracy is less critical for system capacity in such a state with low active reception duty cycle. The primary motivation for relaxing accuracy requirements in low connectivity states is to allow mobile (e.g. battery powered) devices such as UEs to save power. Measurement accuracy is specified as being applicable over a certain time duration i.e. a certain measurement period. To save power, it may hence be desirable that the UE performs less frequent measurements, resulting in savings in power used in Radio Frequency (RF) and/or baseband circuits to undertake the measurement. When less frequent measurements samples are obtained, it would be beneficial to either extend the measurement period, or if it is undesirable to extend measurement delays then it would be beneficial to accept that the measurement result is less accurate due to the smaller number of samples are used to determine it. Accordingly, accuracy of UE measurements may be relaxed in cases when it is less critical to allow reduced UE power consumption. On the other hand, accuracy of the UE measurements is not relaxed for UEs in higher connectivity states where accurate mobility decisions are more critical.

### BRIEF DESCRIPTION OF THE DRAWINGS

These and other aspects, features and advantages will be apparent and elucidated from the following description of various embodiments, reference being made to the accompanying drawings, in which:
Figure 1 schematically illustrates a user equipment communicating with a network node;
Figure 2 schematically illustrates a flowchart of a method of controlling UE measurements, in accordance with an example embodiment;
Figure 3 schematically illustrates a flowchart of a method performed by an UE, in accordance with an example embodiment;
Figure 4 schematically illustrates a flowchart of a method performed by a network node, in accordance with an example embodiment;
Figure 5 presents a carrier comprising computer program according to an exemplary embodiment;
Figure 6 schematically illustrates an example implementation of an apparatus for performing the methods of Figures 2-4; and
Figure 7 schematically illustrates an alternative example implementation of an apparatus for performing the methods of Figures 2-4.

### DETAILED DESCRIPTION OF EMBODIMENTS

The technology will now be described more fully hereinafter with reference to the accompanying drawings, in which certain embodiments are shown. The technology may, however, be embodied in many different forms and should not be construed as limited to the embodiments set forth herein; rather, these embodiments are provided by way of example so that this disclosure will be thorough and complete, and will fully convey the scope of the technology to those persons skilled in the art. Like reference numbers refer to like elements or method steps throughout the description.

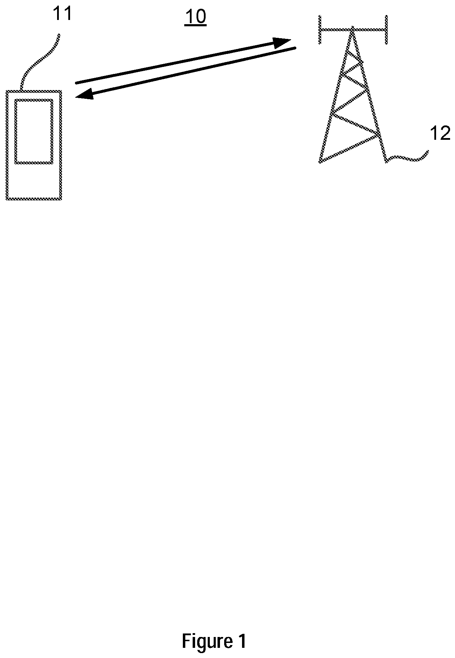

Figure 1 schematically illustrates a telecommunication system 10. The system 10 comprises an UE adapted to communicate with a network node.. As used in this disclosure, the term UE is used to mean any device, which can be used by a user to communicate. Also, the term UE may be referred to as a mobile terminal, a terminal, a user terminal (UT), a wireless terminal, a wireless communication device, a wireless transmit/receive unit (WTRU), a mobile phone, a cell phone, a computer, a laptop computer, a tablet computer, etc. etc. Also, even if the term UE may imply user interaction, it should be appreciated that other communication equipment (e.g. so-called MTC devices) which do not necessarily involve human interaction may equally possible benefit from the teachings of this disclosure. Furthermore, as used herein the term "network node" may denote any fixed point being capable of communicating with the UE. As such, it may be referred to as a base station, a radio base station, a NodeB or an evolved NodeB (eNB), a Radio Network Controller (RNC), access point, etcetera. Within the context of this disclosure it should be understood that the term "network node" may further denote a node that is not necessarily part of what is typically referred to as a Radio Access Network, e.g. a Mobility Management Entity (MME), a Serving General Packet Radio Service Support Node (SGSN), a Home Subscriber Server (HSS) or a Home Location Register (HLR). Thus, when used herein the term "network node" may also include, e.g., core network nodes.

In one of its aspects, this disclosure presents methods and apparatuses for controlling UE measurements. The various embodiments that are described recognize that a quality level e.g. a performance level at which the UE measurements are performed may be adapted in dependence of a current UE activity level. This allows for an adaptive control of the UE measurements. Hereby it is for example made possible to limit or reduce power consumption of the UEs.

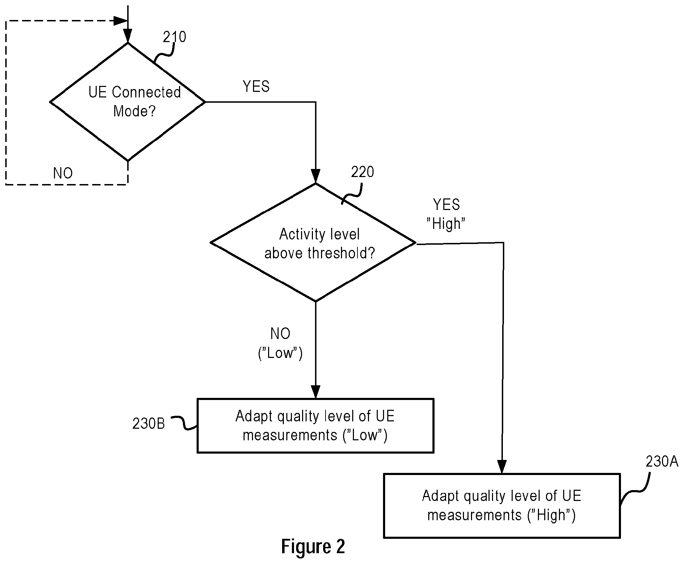

Figure 2 schematically illustrates a flowchart of a method of controlling UE measurements, in accordance with an example embodiment. First, it may be determined 210 whether an UE is in connected mode (i.e. a connected state) or in idle mode (i.e., an idle state). The connected mode may e.g. be a RRC_CONNECTED mode. The idle mode may e.g. be a RRC_IDLE mode. In response to a determination that said UE is in the connected mode, the method continues by determining 220 whether an UE activity level of said UE represents a first activity level or a second activity level. For example, the first activity level corresponds to a state where discontinuous reception (DRX) is not applied, and the second activity level corresponds to a state where discontinuous reception is applied.

Furthermore, the method comprises adapting 230 a quality level at which the UE measurements are performed based on the determined activity level.

The first activity level may correspond to a high activity level, i.e. the UE activity is considered to be high. The second activity level may correspond to a low activity level, i.e. the UE activity is considered to be low. A low activity level hence indicates an UE activity, which is comparatively lower than a high activity level. Or said differently, a high activity level indicates an UE activity, which is comparatively higher than a low activity level.

As will be appreciated, in response to determining that the UE activity level of said UE represents the first activity level (e.g., "High" in Figure 2), the UE measurements are adapted 230A to a first quality level corresponding to a first performance level. Similarly, in response to determining that the UE activity level of said UE represents the second activity level (e.g., "Low" in Figure 2), the UE measurements are adapted 230B to a second quality level corresponding to a second performance level. Typically, the second quality level may be a quality level which is comparatively lower than the first quality level.

In some embodiments, the quality level comprises an intensity level of the UE measurements (e.g., measurement activity). For example, in response to determining that the UE activity level of said UE represents the first activity level, the UE measurements may be adapted 230A to a first intensity level. Similarly, in response to determining that the UE activity level of said UE represents the second activity level, the UE measurements may be adapted 230B to a second intensity level, wherein the second intensity level is comparatively lower than the first intensity level.

In some embodiments, the quality level comprises an accuracy level of the UE measurements. For example, in response to determining that the UE activity level of said UE represents the first activity level, the UE measurements may be adapted 230A to a first accuracy level. In response to determining that the UE activity level of said UE represents the second activity level, the UE measurements may be adapted 230B to a second accuracy level, wherein the second accuracy level is comparatively lower than the first accuracy level.

As is appreciated, determining 220 whether the UE activity level of said UE represents the first activity level or the second activity level may comprise comparing the UE activity level of said UE with a predefined threshold activity level. It may be determined that the UE activity level represents the first activity level (i.e., "High" in Figure 2) in response to the UE activity level of said UE being above the predefined threshold activity level. Also, it may be determined that the UE activity level represents the second activity level (i.e. "Low" in Figure 2) in response to the UE activity level of said UE being below or equal to the predefined threshold activity level.

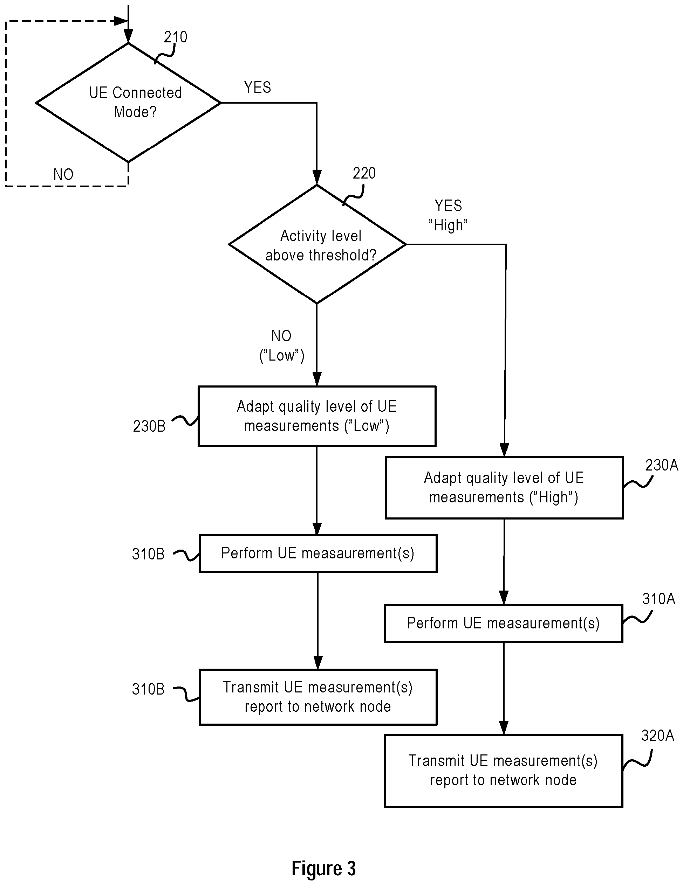

In some embodiments, the method may be performed or otherwise executed by a UE. An example method performed by a UE is schematically illustrated in Figure 3. As can be seen in Figure 3, the method may additionally comprise performing 310A, 310B UE measurement(s) at the adapted quality level, e.g. "low" or "high". In response to having performed the UE measurement(s), the UE may also send, i.e. transmit 320A, 320B, a message to a network node, wherein said message comprises information or otherwise indicates a result from the performed UE measurement(s). In other words, the UE can be said to send a UE measurement(s) report to the network node. This way, the network node may be informed about the UE measurement(s) performed by the UE.

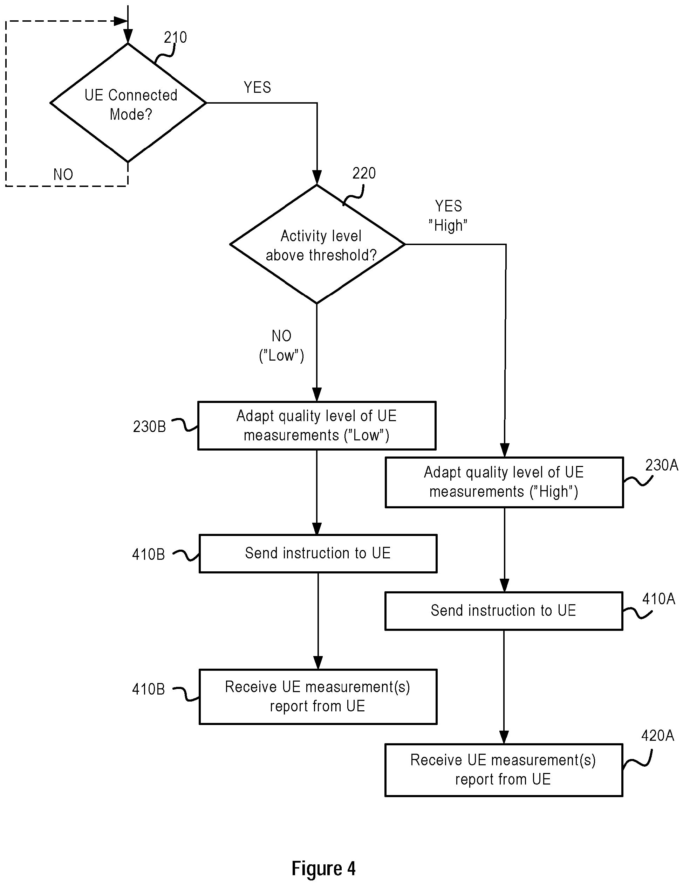

In alternative embodiments, the method may be performed or otherwise executed by a network node. An example method performed by a network node is schematically illustrated in Figure 4. As can be seen in Figure 4, the method may further comprise transmitting 410A, 410B a message to said UE, wherein the message includes an instruction to the UE to adapt the quality level at which the UE measurements are performed. Also, the method may subsequently comprise receiving 420A, 420B a message from the UE, wherein said message comprises information or otherwise indicates a result from the performed UE measurements. In other words, the network node can be said to receive a UE measurement(s) report from the UE. This way, the network node may be informed about the UE measurement(s) performed by the UE.

Figures 2-4 illustrate embodiments of a method that allow for an adaptive control of UE measurements. An adaptive control of the UE measurements may have several advantages. For example, it is made possible to limit, or reduce, the power consumption of the UE.

### Various detailed embodiments of determining the activity of the UE

As will be appreciated from the description with respect to Figures 2-4, it is determined whether an UE activity level of said UE represents a first activity level (e.g., high activity level) or a second activity level (e.g., low activity level). There exist various embodiments of determining whether an UE activity level of said UE represents the first activity level or the second activity level. For a higher connectivity level, more accurate measurement (e.g., Received Signal Code Power (RSCP), Reference Signal Received Power (RSRP), Ec/lo, Reference Signal Received Quality (RSRQ)) requirements may be performed, and for lower connectivity, less accurate measurements may be performed, or applied. Some of the ways in which connectivity may be estimated include the following examples:
Example 1: In one embodiment, the determining whether an UE activity level of said UE represents a first activity/connectivity level or a second activity/connectivity level comprises: determining whether the UE is in a DCH state or in a FACH state; in response to determining that the UE is in the DCH state determining, or otherwise deciding, that the UE is in the first activity/connectivity level; and in response to determining that the UE is in the FACH state determining, or otherwise deciding, that the UE is in the second activity/connectivity level, wherein the second activity level is comparatively lower than the first activity level. In other words, a UE configured to DCH state may be considered as being in higher connectivity, a UE configured to cell FACH state may be considered as being in lower connectivity.
Example 2: In one embodiment, the determining whether an UE activity level of said UE represents a first activity level or a second activity level comprises: determining whether the UE is operating with DRX or without DRX; in response to determining that the UE is operating without DRX determining, or otherwise deciding, that the UE is in the first activity level, and in response to determining that the UE is operating with DRX determining, or otherwise deciding, that the UE is in the second activity level, wherein the second activity level is comparatively lower than the first activity level. In other words, a UE operating with discontinuous reception (DRX) may be considered as being in lower connectivity, and a UE operating with no DRX may be considered as being in higher connectivity.
Example 3: In one embodiment, the determining whether an UE activity level of said UE represents a first activity level or a second activity level comprises: determining whether the UE is operating with DRX; in response to determining that the UE is operating with DRX, determining a length of a DRX cycle; comparing the determined length of the DRX cycle with a threshold value; in response to the DRX cycle being below or equal to the threshold value determining, or otherwise concluding, that the UE is in a first activity level; and in response to the DRX cycle being above the threshold value determining, or otherwise concluding, that the UE is in a second activity level, wherein the second activity level is comparatively lower than the first activity level. In other words, a UE operating with a DRX cycle shorter than a certain threshold may be considered as being in higher connectivity, and a UE operating with greater than or equal to the same threshold may be considered as being in lower connectivity. Thus, a UE operating with a first DRX cycle may considered as being in higher connectivity, whereas a UE operating with a second, different, DRX cycle may be considered as being in comparatively lower connectivity.

In some embodiments, one or more of the examples 1-3 above may be combined. Additional, or alternative, examples of determining the UE connectivity level are also conceivable. For instance, it would be possible to utilize downlink buffer occupancy, uplink buffer occupancy, or both to determine the UE connectivity level. Additionally, or alternatively, downlink data transfer history, uplink data transfer history, or both may be used to determine the UE connectivity level. Still further, Channel Quality Indicator (CQI) reporting configuration may be used to determine connectivity, e.g. when the UE is configured with a shorter CQI reporting cycle it is considered to be in comparatively higher connectivity and when it is configured with a longer CQI reporting cycle it is considered to be in comparatively lower connectivity.

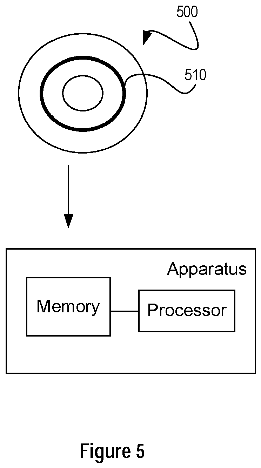

Fig. 5 shows an example of a computer-readable medium, in this example in the form of a data disc 500. In one embodiment the data disc 500 is a magnetic data storage disc. The data disc 500 is configured to carry instructions 510 that when loaded into a processor of an apparatus, executes a method or procedure according to any one of the embodiments disclosed hereinabove with respect to Figures 2-4. The data disc 500 is arranged to be connected to or within and read by a reading device (not shown), for loading the instructions into the processor. One such example of a reading device in combination with one (or several) data disc(s) 500 is a hard drive. It should be noted that the computer-readable medium can also be other mediums such as compact discs, digital video discs, flash memories or other memory technologies commonly used. In such an embodiment the data disc 500 is one type of a tangible computer-readable medium. The instructions may alternatively be downloaded to a computer data reading device, such as a computer or other apparatus capable of reading computer coded data on a computer-readable medium, by comprising the instructions in a computer-readable signal (not shown) which is transmitted via a wireless (or wired) interface (for example via the Internet) to the computer data reading device for loading the instructions into a processor of the apparatus. In such an embodiment, the computer-readable signal is one type of a non-tangible computer-readable medium.

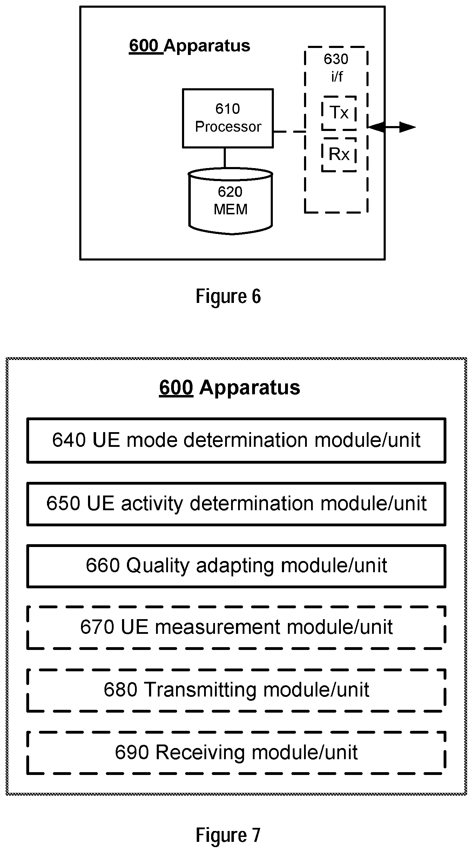

Turning now to Figure 6, an apparatus 600 will be described. The apparatus 600 is adapted to perform, or otherwise execute, a method according to any one of the various embodiments described earlier in this disclosure. The apparatus 600 is suitable for, or particularly useful, for adaptively controlling UE measurement(s).

The apparatus 600 comprises means 610configured to determine whether an UE is in connected mode or in idle mode. Furthermore, the means 610 is configured to determine whether an UE activity level of said UE represents a first activity level or a second activity level. Said means 610is typically, but not necessarily, configured to determine whether the UE activity level of said UE represents a first activity level or a second activity level in response to having determined that the UE is in connected mode. Moreover, the means 610is configured to adapt a quality level at which the UE measurements are performed based on the determined activity level. Again, the first activity level may correspond to a high activity level and the second activity level may correspond to a low activity level.

The means 610 is further configured to adapt the UE measurements to a first quality level in response to a determination that the UE activity level of said UE represents the first activity level. Also, the means 610is configured to adapt the UE measurements to a second quality level in response to a determination that the UE activity level of said UE represents the second activity level. The second quality level may advantageously be a quality level which is comparatively lower than the first quality level.

In some embodiments, the quality level comprises an intensity level of the UE measurements. The means 610 is configured to adapt the UE measurements to a first intensity level in response to a determination that the UE activity level of said UE represents the first activity level. Also, the means 610 is configured to adapt the UE measurements to a second intensity level in response to determining that the UE activity level of said UE represents the second activity level. The second intensity level may be comparatively lower than the first intensity level.

In some embodiments, the quality level comprises an accuracy level of the UE measurements. The means 610 is configured to adapt the UE measurements to a first accuracy level in response to a determination that the UE activity level of said UE represents the first activity level. Also, the means 610 is configured to adapt the UE measurements to a second accuracy level in response to a determination that the UE activity level of said UE represents the second activity level. The second accuracy level may be comparatively lower than the first accuracy level.

In some embodiments, the apparatus 600 means 610 is adapted to compare the UE activity level of said UE with a predefined threshold activity level; means 610is configured to determine that the UE activity level represents the first activity level in response to the UE activity level of said UE being above the predefined threshold activity level; and means 610 is configured to determine that the UE activity level represents the second activity level in response to the UE activity level of said UE being below or equal to the predefined threshold activity level.

In one embodiment, the apparatus 600 comprises means e.g. 610 configured to perform UE measurements at the adapted quality level. Also, the apparatus may comprise means 630 configured to transmit a message to another apparatus or network node, wherein said message comprises information or otherwise indicates a result from the performed UE measurements.

In an alternative embodiment, the apparatus 600 comprises means 630 configured to transmit a message to another apparatus (e.g., a UE), the message including an instruction to the apparatus to adapt the quality level at which the UE measurements are performed. The apparatus 600 may also comprise means 630 configured to receive a message from said another apparatus, wherein said message comprises information or otherwise indicates a result from the performed UE measurements.

With continued reference to Figure 6, an example implementation of the apparatus 600 will be briefly described. The apparatus 600 illustrated in Figure 6 comprises a processor or processing means 610 and a memory or memory means 620. Also, a communications interface 630 may be provided in order to allow the apparatus 600 to communicate with other apparatuses (e.g., UEs and/or network nodes), etc. To this end, the communications interface 630 may comprise a transmitter (Tx) and a receiver (Rx). Alternatively, the communications interface 630 may comprise a transceiver (Tx/Rx) combining both transmission and reception capabilities. The communications interface 630 may include a RF interface allowing the apparatus 600 to communicate with apparatuses etc through a radio frequency band through the use of different radio frequency technologies such as LTE, WCDMA, any other cellular network standardized by the 3rd Generation Partnership Project (3GPP), or any other wireless technology such as Wi-Fi, Bluetooth®, etc.

The memory 620 comprises instructions executable by the processor 610 whereby the apparatus is operative to: determine whether an UE is in connected mode or in idle mode; and in response to determining that said UE is in connected mode, the apparatus is further operative to: determine whether an UE activity level of said UE represents a first activity level or a second activity level; and adapt a quality level at which the UE measurements are performed based on the determined activity level.

In one embodiment, the memory 620 comprises instructions executable by the processor whereby the apparatus is operative to: in response to determining that the UE activity level of said UE represents the first activity level, adapt the UE measurements to a first quality level; and in response to determining that the UE activity level of said UE represents the second activity level, adapt the UE measurements to a second quality level, wherein the second quality level is a quality level which is comparatively lower than the first quality level.

For example, the quality level may comprise an intensity level of the UE measurements. The memory 620 may for example comprise instructions executable by the processor 610 whereby the apparatus 600 is operative to: in response to determining that the UE activity level of said UE represents the first activity level, adapt the UE measurements to a first intensity level; and in response to determining that the UE activity level of said UE represents the second activity level, adapt the UE measurements to a second intensity level, wherein the second intensity level is comparatively lower than the first intensity level.

For example, the quality level may comprise an accuracy level of the UE measurements. The memory 620 comprises instructions executable by the processor 610 whereby the apparatus 600 is operative to: in response to determining that the UE activity level of said UE represents the first activity level, adapt the UE measurements to a first accuracy level; and in response to determining that the UE activity level of said UE represents the second activity level, adapt the UE measurements to a second accuracy level, wherein the second accuracy level is comparatively lower than the first accuracy level.

In advantageous embodiments, the memory 620 may comprise instructions executable by the processor 610 whereby the apparatus 600 is operative to: compare an UE activity level of said UE with a predefined threshold activity level; determine that the UE activity level represents the first activity level in response to the UE activity level of said UE being above the predefined threshold activity level; and determine that the UE activity level represents the second activity level in response to the UE activity level of said UE being below or equal to the predefined threshold activity level.

In one embodiment, the apparatus 600 is a UE. The memory 620 may comprise instructions executable by the processor 610 whereby the UE 600 is operative to: perform UE measurements at the adapted quality level; and transmit (e.g. via Tx 630) a message to a network node, wherein said message comprises information or otherwise indicates a result from the performed UE measurements.

In an alternative embodiment, the apparatus 600 is a network node. The memory 620 may comprise instructions executable by the processor 610 whereby the UE 600 is operative to: transmit (e.g., via Tx 630) a message to said UE, the message including an instruction to the UE to adapt the quality level at which the UE measurements are performed; and receive (e.g., via Rx 630) a message from the UE, wherein said message comprises information or otherwise indicates a result from the performed UE measurements.

Figure 7 illustrates an alternative implementation of an apparatus 600. The apparatus 600 may comprise a UE mode determination module 640, or unit. The UE mode determination module 640 is configured to determine whether a UE is in connected mode or in idle mode. The apparatus 600 may also comprise a UE activity determination module 650, or unit. The UE activity determination module 650 is configured to determine whether an UE activity level of said UE represents a first activity level or a second activity level. Typically, the UE activity determination module 650 may be configured to determine the UE activity level in response to a preceding determination that said UE is in connected mode. The apparatus may also comprise a quality adapting module 660, or unit. The quality adapting module 660 is configured to adapt a quality level at which the UE measurements are performed based on the determined activity level. Again, the first activity level may correspond to a high activity level and the second activity level may correspond to a low activity level.

In one embodiment, the quality adapting module 660 may be configured to adapt the UE measurements to a first quality level corresponding to a first performance level in response to determining that the UE activity level of said UE represents the first activity level. Additionally, the quality adapting module 660 may be configured to adapt the UE measurements to a second quality level corresponding to a second performance level in response to determining that the UE activity level of said UE represents the second activity level. The second quality level may be a quality level which is comparatively lower than the first quality level.

The quality level may comprise an intensity level of the UE measurements. In one embodiment, the quality adapting module 660 may be configured to adapt the UE measurements to a first intensity level in response to determining that the UE activity level of said UE represents the first activity level. Furthermore, the quality adapting module 660 may be configured adapt the UE measurements to a second intensity level in response to determining that the UE activity level of said UE represents the second activity level. The second intensity level may be comparatively lower than the first intensity level.

The quality level may additionally, or alternatively, comprise an accuracy level of the UE measurements. In one embodiment, the quality adapting module 660 may be configured to adapt the UE measurements to a first accuracy level in response to determining that the UE activity level of said UE represents the first activity level. Furthermore, the quality adapting module 660 may be configured to adapt the UE measurements to a second accuracy level in response to determining that the UE activity level of said UE represents the second activity level. The second accuracy level may be comparatively lower than the first accuracy level.

In some embodiments, the UE activity determination module 650 may be configured to compare the UE activity level of said UE with a predefined threshold activity level; determine that the UE activity level represents the first activity level in response to the UE activity level of said UE being above the predefined threshold activity level; and determine that the UE activity level represents the second activity level in response to the UE activity level of said UE being below or equal to the predefined threshold activity level.

In one embodiment, the apparatus 600 may be implemented as a UE. The UE 600 may comprise a UE measurement module 670, or unit, configured to perform UE measurements at the adapted quality level. Also, a transmitting module 680, or unit, may be provided. The transmitting module 680 may be configured to transmit a message to a network node, wherein said message comprises information or otherwise indicates a result from the performed UE measurements.

In an alternative embodiment, the apparatus 600 is implemented as a network node. A network node 600 may comprise a transmitting module 680 configured to transmit a message to said UE, the message including an instruction to the UE to adapt the quality level at which the UE measurements are performed. Also, a receiving module 690 may be provided. The receiving module 690, or unit, may be configured to receive a message from the UE, wherein said message comprises information or otherwise indicates a result from the performed UE measurements. The modules 640-670 may be part of a processor or processing module or processing unit e.g. processor 610 of Figure 6. The transmitting and receiving modules/units may be part of means 630 (TX/RX or communication interface) of Figure 6.

Various embodiments of the technology have been described hereinabove. The various embodiments may be varied in different forms. For example, in accordance with one embodiment, a network node (e.g., a Radio Network Controller (RNC), a Node B, an evolved NodeB) may determine the connectivity level of a connected UE using e.g. a method in accordance with any one of the embodiments described herein. Based on the UE connectivity level, the need for more or less accurate measurements may be indicated to the UE. Examples of means for indicating to the UE the need for more or less accurate measurements include:
- Radio Resource Control (RRC) signaling
- L1 signalling (e.g. HS-SCCH (High Speed Shared Control CHannel) order).

Since an example motivation for performing less accurate measurements is power saving, it is possible that certain UE implementations may not implement less accurate measurements. In this scenario, the UE may indicate via e.g. UE capabilities whether it is capable of less accurate measurements. In this scenario, only UEs which indicate a capability to perform less accurate measurements would be configured to perform less accurate measurements.

In yet another example, an UE may filter, in e.g. means 610, fewer measurement samples when reduced accuracy requirements have been indicated to be applicable. By using a reduced number of measurement samples within a given time, the power consumption in RF and/or baseband circuits associated with the processing of the measurement may be reduced. As the overall time duration for performing measurements is generally not extended, measurement reporting delays are typically not increased but rather the accuracy of the measurement can be reduced.

Various embodiments described herein recognize that UEs experiencing a high connectivity generally perform more accurate measurements of serving and neighbor cells. For UEs experiencing a lower connectivity, less accurate measurements are required, e.g. so as to facilitate reduced power consumption and improved battery life. By determining the UE connectivity and adapt the quality level of the performed UE measurement(s) based on the UE connectivity level it is possible to improve performance. For example, it is made possible to limit, or reduce, the power consumption of the UE.

Various embodiments described herein provide for an adaptive control of UE measurements. An adaptive control of the UE measurements may have several advantages. For example, it is made possible to limit, or reduce, the power consumption of the UE.

In the detailed description hereinabove, for purposes of explanation and not limitation, specific details are set forth in order to provide a thorough understanding of various embodiments described in this disclosure. In some instances, detailed descriptions of well-known devices, components, circuits, and methods have been omitted so as not to obscure the description of the embodiments disclosed herein with unnecessary detail. Thus, for example, it will be appreciated that block diagrams herein can represent conceptual views of illustrative circuitry or other functional units embodying the principles of the described embodiments. Similarly, it will be appreciated that any flow charts and the like represent various processes which may be substantially represented in computer readable medium and so executed by a computer or processor, whether or not such computer or processor is explicitly shown. The functions of the various elements including functional blocks, may be provided through the use of hardware such as circuit hardware and/or hardware capable of executing software in the form of coded instructions stored on the above-mentioned computer readable medium. Thus, such functions and illustrated functional blocks are to be understood as being either hardware-implemented and/or computer-implemented, and thus machine-implemented. In terms of hardware implementation, the functional blocks may include or encompass, without limitation, digital signal processor (DSP) hardware, reduced instruction set processor, hardware (e.g., digital or analog) circuitry including but not limited to application specific integrated circuit(s) [ASIC], and/or field programmable gate array(s) (FPGA(s)), and (where appropriate) state machines capable of performing such functions. In terms of computer implementation, a computer is generally understood to comprise one or more processors or one or more controllers. When provided by a computer or processor or controller, the functions may be provided by a single dedicated computer or processor or controller, by a single shared computer or processor or controller, or by a plurality of individual computers or processors or controllers, some of which may be shared or distributed. Moreover, use of the term "processor" or "controller" may also be construed to refer to other hardware capable of performing such functions and/or executing software, such as the example hardware recited above.

Modifications and other variants of the described embodiments will come to mind to one skilled in the art having benefit of the teachings presented in the foregoing description and associated drawings. Therefore, it is to be understood that the embodiments are not limited to the specific example embodiments disclosed and that modifications and other variants are intended to be included within the scope of this disclosure. Although specific terms may be employed herein, they are used in a generic and descriptive sense only and not for purposes of limitation.

The present disclosure concerns radio communication. More particularly, the present disclosure introduces an adaptive control of UE measurements in dependence of UE activity level (e.g., high activity vs. low activity).

## Claims

1. A method of adaptively controlling User Equipment, UE, measurements, the method comprising:
determining (210) whether a UE is in connected mode or in idle mode; and
in response to determining (210) that said UE is in connected mode, determining (220) whether a UE activity level of said UE represents a first activity level or a second activity level, the determining (220) of the activity level of the UE including determining whether the UE is in a dedicated channel, DCH, state or a forward access channel, FACH, state and
adapting (230A, 230B) a quality level at which the UE measurements are performed based on the determined activity level.

2. The method according to claim 1, wherein the first activity level corresponds to a high activity level (230A) and the second activity level corresponds to a low activity level (230B); and/or wherein the first activity level corresponds to a state where discontinuous reception (DRX) is not applied, and the second activity level corresponds to a state where discontinuous reception is applied.

3. The method according to anyone of claims 1-2, comprising:
in response to determining (220) that the UE activity level of said UE represents the first activity level, adapting the UE measurements to a first quality level corresponding to a first performance level (230A); and
in response to determining (220) that the UE activity level of said UE represents the second activity level, adapting the UE measurements to a second quality level corresponding to a second performance level, wherein the second performance level is a quality level which is comparatively lower than the first performance level (230B).

4. The method according to any one of the claims 1-2, wherein the quality level comprises an intensity level of the UE measurements, wherein, as an option, the method comprises:
in response to determining (220) that the UE activity level of said UE represents the first activity level, adapting the UE measurements to a first intensity level; and
in response to determining (220) that the UE activity level of said UE represents the second activity level, adapting the UE measurements to a second intensity level, wherein the second intensity level is comparatively lower than the first intensity level.

5. The method according to anyone of claims 1-4, wherein the quality level comprises an accuracy level of the UE measurements; wherein, as an option, the method comprises:
in response to determining that the UE activity level of said UE represents the first activity level, adapting the UE measurements to a first accuracy level; and
in response to determining that the UE activity level of said UE represents the second activity level, adapting the UE measurements to a second accuracy level, wherein the second accuracy level is comparatively lower than the first accuracy level.

6. The method according to any one of the claims 1-5, wherein determining (220) whether the UE activity level of said UE represents a first activity level or a second activity level comprises:
comparing the UE activity level of said UE with a predefined threshold activity level;
determining that the UE activity level represents the first activity level in response to the UE activity level of said UE being above the predefined threshold activity level (220); and
determining that the UE activity level represents the second activity level in response to the UE activity level of said UE being below or equal to the predefined threshold activity level (220).

7. An apparatus (600) for adaptively controlling User Equipment, UE, measurements, the apparatus comprising a processor (610) and a memory (620), wherein the memory (620) comprises instructions executable by the processor (610) whereby the apparatus is operative to:
determine whether a UE is in connected mode or in idle mode; and in response to determining that said UE is in connected mode, the apparatus is further operative to:
determine whether a UE activity level of said UE represents a first activity level or a second activity level, the determining of the activity level of the UE including determining whether the UE is in a dedicated channel, DCH, state or a forward access channel, FACH, state; and
adapt a quality level at which the UE measurements are performed based on the determined activity level (220A, 220B).

8. The apparatus (600) according to claim 7, wherein the first activity level corresponds to a high activity level and the second activity level corresponds to a low activity level; and/or wherein the first activity level corresponds to a state where discontinuous reception (DRX) is not applied, and
the second activity level corresponds to a state where discontinuous reception is applied.

9. The apparatus (600) according to any one of claims 7-8, wherein the memory (620) comprises instructions executable by the processor (610) whereby the apparatus (600) is operative to:
in response to determining that the UE activity level of said UE represents the first activity level, adapt the UE measurements to a first quality level corresponding to a first performance level (220A); and
in response to determining that the UE activity level of said UE represents a second activity level corresponding to a second performance level, adapt the UE measurements to the second quality level, wherein the second quality level is comparatively lower than the first quality level (220B);
wherein, as an option, the memory (620) comprises instructions executable by the processor (610) whereby the apparatus (600) is operative to:
in response to determining that the UE activity level of said UE represents the first activity level, adapt the UE measurements to a first intensity level; and
in response to determining that the UE activity level of said UE represents the second activity level, adapt the UE measurements to a second intensity level, wherein the second intensity level is comparatively lower than the first intensity level.

10. The apparatus (600) according to any one of the claims 7-9, wherein the first or second quality level comprises an intensity level of the UE measurements.

11. The apparatus (600) according to anyone of claims 7-10, wherein the quality level comprises an accuracy level of the UE measurements, wherein, as an option, the memory (620) comprises instructions executable by the processor (610) whereby the apparatus (600) is operative to:
in response to determining that the UE activity level of said UE represents the first activity level, adapt the UE measurements to a first accuracy level; and
in response to determining that the UE activity level of said UE represents the second activity level, adapt the UE measurements to a second accuracy level, wherein the second accuracy level is comparatively lower than the first accuracy level.

12. The apparatus (600) according to any one of the claims 7-11, wherein the memory (620) comprises instructions executable by the processor (610) whereby the apparatus (600) is operative to:
compare UE activity level with a predefined threshold activity level;
determine that the UE activity level represents the first activity level in response to the UE activity level of said UE being above the predefined threshold activity level (230A); and
determine that the UE activity level represents the second activity level in response to the UE activity level of said UE being below or equal to the predefined threshold activity level (230B).

13. The apparatus (600) according to any one of the claims 7-12, wherein the apparatus (600) is said UE and wherein the memory (620) comprises instructions executable by the processor whereby the UE is operative to:
perform UE measurements at the adapted quality level; and
transmit a message to a network node, wherein said message comprises information or otherwise indicates a result from the performed UE measurements; or wherein the apparatus (600) is a network node, and wherein the memory (620) comprises instructions executable by the processor (610) whereby the UE is operative to:
transmit a message to said UE, the message including an instruction to the UE to adapt the quality level at which the UE measurements are performed; and
receive a message from the UE, wherein said message comprises information or otherwise indicates a result from the performed UE measurements.

14. Computer program comprising instructions (510) which when executed on at least one processor (610) of an apparatus (600) causes the apparatus (600) to perform, or execute, a method according to any one of the claims 1-6.

15. A carrier comprising the computer program according to claim 14, wherein the carrier is one of an electronic signal, an optical signal, a radio signal, or a computer readable storage medium.

## Patentansprüche

1. Verfahren zum adaptiven Steuern von Messungen der Benutzereinrichtung, UE, wobei das Verfahren Folgendes umfasst:
Bestimmen (210), ob sich eine UE im verbundenen Modus oder im Leerlaufmodus befindet; und
in Reaktion auf das Bestimmen (210), dass sich die UE im verbundenen Modus befindet, Bestimmen (220), ob ein UE-Aktivitätsniveau der UE ein erstes Aktivitätsniveau oder ein zweites Aktivitätsniveau darstellt, wobei das Bestimmen (220) des UE-Aktivitätsniveaus das Festlegen umfasst, ob sich die UE in einem Zustand des zugeordneten Kanals, DCH, oder in einem Zustand des Vorwärtszugangskanals, FACH, befindet und
Anpassen (230A, 230B) eines Qualitätsniveaus, auf der die UE-Messungen auf der Grundlage des bestimmten Aktivitätsniveaus durchgeführt werden.

2. Verfahren nach Anspruch 1, wobei das erste Aktivitätsniveau einem hohen Aktivitätsniveau (230A) und das zweite Aktivitätsniveau einem niedrigen Aktivitätsniveau (230B) entspricht; und/oder wobei das erste Aktivitätsniveau einem Zustand entspricht, in dem diskontinuierlicher Empfang (DRX) nicht angewendet wird, und das zweite Aktivitätsniveau einem Zustand entspricht, in dem diskontinuierlicher Empfang angewendet wird.

3. Verfahren nach einem der Ansprüche 1 bis 2, umfassend:
in Reaktion auf das Bestimmen (220), dass das UE-Aktivitätsniveau der UE das erste Aktivitätsniveau darstellt, Anpassen der UE-Messungen an ein erstes Qualitätsniveau, die einem ersten Leistungsniveau (230A) entspricht; und
in Reaktion auf das Bestimmen (220), dass das UE-Aktivitätsniveau der UE das zweite Aktivitätsniveau darstellt, Anpassen der UE-Messungen an ein zweites Qualitätsniveau, die einem zweiten Leistungsniveau entspricht, wobei es sich beim zweiten Leistungsniveau um ein Qualitätsniveau handelt, die vergleichsweise niedriger als das erste Leistungsniveau (230B) ist.

4. Verfahren nach einem der Ansprüche 1 bis 2, wobei das Qualitätsniveau ein Intensitätsniveau der UE-Messungen umfasst, wobei das Verfahren optional Folgendes umfasst:
in Reaktion auf das Bestimmen (220), dass das UE-Aktivitätsniveau der UE das erste Aktivitätsniveau darstellt, Anpassen der UE-Messungen an ein erstes Intensitätsniveau; und
in Reaktion auf das Bestimmen (220), dass das UE-Aktivitätsniveau der UE das zweite Aktivitätsniveau darstellt, Anpassen der UE-Messungen an ein zweites Intensitätsniveau, wobei das zweite Intensitätsniveau vergleichsweise niedriger als das erste Intensitätsniveau ist.

5. Verfahren nach einem der Ansprüche 1 bis 4, wobei das Qualitätsniveau ein Genauigkeitsniveau der UE-Messungen umfasst; wobei das Verfahren optional Folgendes umfasst:
in Reaktion auf das Bestimmen, dass das UE-Aktivitätsniveau der UE das erste Aktivitätsniveau darstellt, Anpassen der UE-Messungen an ein erstes Genauigkeitsniveau; und
in Reaktion auf das Bestimmen, dass das UE-Aktivitätsniveau der UE das zweite Aktivitätsniveau darstellt, Anpassen der UE-Messungen an ein zweites Genauigkeitsniveau, wobei das zweite Genauigkeitsniveau vergleichsweise niedriger als das erste Genauigkeitsniveau ist.

6. Verfahren nach einem der Ansprüche 1 bis 5, wobei das Bestimmen (220), ob das UE-Aktivierungsniveau der UE ein erstes Aktivitätsniveau oder ein zweites Aktivitätsniveau darstellt, Folgendes umfasst:
Vergleichen des UE-Aktivitätsniveaus der UE mit einem vordefinierten Aktivitätsniveauschwellenwert;
Bestimmen, dass das UE-Aktivitätsniveau das erste Aktivitätsniveau als Reaktion darauf darstellt, dass das UE-Aktivitätsniveau der UE über dem vordefinierten Aktivitätsniveauschwellenwert (220) liegt; und
Bestimmen, dass das UE-Aktivitätsniveau das zweite Aktivitätsniveau als Reaktion darauf darstellt, dass das UE-Aktivitätsniveau der UE kleiner oder gleich dem vordefinierten Aktivitätsniveauschwellenwert (220) ist.

7. Vorrichtung (600) zum adaptiven Steuern von Messungen der Benutzereinrichtung, UE, wobei die Vorrichtung einen Prozessor (610) und einen Speicher (620) umfasst, wobei der Speicher (620) durch den Prozessor (610) ausführbare Anweisungen umfasst, wobei die Vorrichtung operativ ist zum:
Bestimmen, ob sich eine UE im verbundenen Modus oder im Leerlaufmodus befindet; und in Reaktion auf das Bestimmen, dass sich die UE im verbundenen Modus befindet, ist die Vorrichtung ferner operativ zum:
Bestimmen, ob ein UE-Aktivitätsniveau der UE ein erstes Aktivitätsniveau oder ein zweites Aktivitätsniveau darstellt, wobei das Bestimmen des UE-Aktivitätsniveaus das Festlegen umfasst, ob sich die UE in einem Zustand des zugeordneten Kanals, DCH, oder in einem Zustand des Vorwärtszugangskanals, FACH, befindet; und
Anpassen eines Qualitätsniveaus, wobei die UE-Messungen auf der Grundlage des bestimmten Aktivitätsniveaus (220A, 220B) durchgeführt werden.

8. Vorrichtung (600) nach Anspruch 7, wobei das erste Aktivitätsniveau einem hohen Aktivitätsniveau und das zweite Aktivitätsniveau einem niedrigen Aktivitätsniveau entspricht; und/oder wobei das erste Aktivitätsniveau einem Zustand entspricht, in dem diskontinuierlicher Empfang (DRX) nicht angewendet wird, und
das zweite Aktivitätsniveau einem Zustand entspricht, in dem diskontinuierlicher Empfang angewendet wird.

9. Vorrichtung (600) nach einem der Ansprüche 7 bis 8, wobei der Speicher (620) durch den Prozessor (610) ausführbare Anweisungen umfasst, wobei die Vorrichtung (600) operativ ist zum:
in Reaktion auf das Bestimmen, dass das UE-Aktivitätsniveau der UE das erste Aktivitätsniveau darstellt, Anpassen der UE-Messungen an ein erstes Qualitätsniveau, die einem ersten Leistungsniveau (220A) entspricht; und
in Reaktion auf das Bestimmen, dass das UE-Aktivitätsniveau der UE ein zweites Aktivitätsniveau darstellt, das einem zweiten Leistungsniveau entspricht, Anpassen der UE-Messungen an das zweite Qualitätsniveau, wobei das zweite Qualitätsniveau vergleichsweise niedriger als das erste Qualitätsniveau ist (220B) ;
wobei der Speicher (620) optional durch den Prozessor (610) ausführbare Anweisungen umfasst, wobei die Vorrichtung (600) operativ ist zum:
in Reaktion auf das Bestimmen, dass das UE-Aktivitätsniveau der UE das erste Aktivitätsniveau darstellt, Anpassen der UE-Messungen an ein erstes Intensitätsniveau; und
in Reaktion auf das Bestimmen, dass das UE-Aktivitätsniveau der UE das zweite Aktivitätsniveau darstellt, Anpassen der UE-Messungen an ein zweites Intensitätsniveau, wobei das zweite Intensitätsniveau vergleichsweise niedriger als das erste Intensitätsniveau ist.

10. Vorrichtung (600) nach einem der Ansprüche 7 bis 9, wobei das erste oder zweite Qualitätsniveau ein Intensitätsniveau der UE-Messungen umfasst.

11. Vorrichtung (600) nach einem der Ansprüche 7 bis 10, wobei das Qualitätsniveau ein Genauigkeitsniveau der UE-Messungen umfasst, wobei der Speicher (620) optional durch den Prozessor (610) ausführbare Anweisungen umfasst, wobei die Vorrichtung (600) operativ ist zum:
in Reaktion auf das Bestimmen, dass das UE-Aktivitätsniveau der UE das erste Aktivitätsniveau darstellt, Anpassen der UE-Messungen an ein erstes Genauigkeitsniveau; und
in Reaktion auf das Bestimmen, dass das UE-Aktivitätsniveau der UE das zweite Aktivitätsniveau darstellt, Anpassen der UE-Messungen an ein zweites Genauigkeitsniveau, wobei das zweite Genauigkeitsniveau vergleichsweise niedriger als das erste Genauigkeitsniveau ist.

12. Vorrichtung (600) nach einem der Ansprüche 7 bis 11, wobei der Speicher (620) durch den Prozessor (610) ausführbare Anweisungen umfasst, wobei die Vorrichtung (600) operativ ist zum:
Vergleichen des UE-Aktivitätsniveaus mit einem vordefinierten Aktivitätsniveauschwellenwert;
Bestimmen, dass das UE-Aktivitätsniveau das erste Aktivitätsniveau als Reaktion darauf darstellt, dass das UE-Aktivitätsniveau der UE über dem vordefinierten Aktivitätsniveauschwellenwert (230A) liegt; und
Bestimmen, dass das UE-Aktivitätsniveau das zweite Aktivitätsniveau als Reaktion darauf darstellt, dass das UE-Aktivitätsniveau der UE kleiner oder gleich dem vordefinierten Aktivitätsniveauschwellenwert (230B) ist.

13. Vorrichtung (600) nach einem der Ansprüche 7 bis 12, wobei die Vorrichtung (600) die UE ist und wobei der Speicher (620) durch den Prozessor ausführbare Anweisungen umfasst, wodurch die UE operativ ist zum:
Durchführen von UE-Messungen auf dem angepassten Qualitätsniveau; und
Übertragen einer Nachricht an einen Netzwerkknoten, wobei die Nachricht Informationen umfasst oder anderweitig ein Ergebnis der durchgeführten UE-Messungen anzeigt; oder wobei die Vorrichtung (600) ein Netzwerkknoten ist, und wobei der Speicher (620) durch den Prozessor (610) ausführbare Anweisungen umfasst, wodurch die UE operativ ist zum:
Übertragen einer Nachricht an die UE, wobei die Nachricht eine Anweisung an die UE enthält, das Qualitätsniveau anzupassen, bei der die UE-Messungen durchgeführt werden; und
Empfangen einer Nachricht von der UE, wobei die Nachricht Informationen umfasst oder anderweitig ein Ergebnis der durchgeführten UE-Messungen anzeigt.

14. Computerprogramm, umfassend Anweisungen (510), die, wenn sie auf mindestens einem Prozessor (610) einer Vorrichtung (600) ausgeführt werden, die Vorrichtung (600) veranlassen, ein Verfahren nach einem der Ansprüche 1 bis 6 durchzuführen oder auszuführen.

15. Träger, der das Computerprogramm nach Anspruch 14 umfasst, wobei der Träger eines von einem elektronischen Signal, einem optischen Signal, einem Funksignal oder einem computerlesbaren Speichermedium ist.

## Revendications

1. Procédé de commande adaptative de mesures d'équipement utilisateur, UE, le procédé comprenant :
le fait de déterminer (210) si un UE est en mode connecté ou en mode repos ; et
en réponse à la détermination (210) que ledit UE est en mode connecté, le fait de déterminer (220) si un niveau d'activité d'UE dudit UE représente un premier niveau d'activité ou un deuxième niveau d'activité, la détermination (220) du niveau d'activité de l'UE incluant le fait de déterminer si l'UE est dans un état de canal dédié, DCH, ou un état de canal d'accès aller, FACH, et
l'adaptation (230A, 230B) d'un niveau de qualité auquel les mesures d'UE sont mises en oeuvre sur la base du niveau d'activité déterminé.

2. Procédé selon la revendication 1, dans lequel le premier niveau d'activité correspond à un haut niveau d'activité (230A) et le deuxième niveau d'activité correspond à un bas niveau d'activité (230B) ; et/ou dans lequel le premier niveau d'activité correspond à un état où une réception discontinue (DRX) n'est pas appliquée, et le deuxième niveau d'activité correspond à un état où une réception discontinue est appliquée.

3. Procédé selon l'une quelconque des revendications 1 ou 2, comprenant :
en réponse à la détermination (220) que le niveau d'activité d'UE dudit UE représente le premier niveau d'activité, l'adaptation des mesures d'UE à un premier niveau de qualité correspondant à un premier niveau de performance (230A) ; et
en réponse à la détermination (220) que le niveau d'activité d'UE dudit UE représente le deuxième niveau d'activité, l'adaptation des mesures d'UE à un deuxième niveau de qualité correspondant à un deuxième niveau de performance, dans lequel le deuxième niveau de performance est un niveau de qualité qui est comparativement plus bas que le premier niveau de performance (230B).

4. Procédé selon l'une quelconque des revendications 1 ou 2, dans lequel le niveau de qualité comprend un niveau d'intensité des mesures d'UE, dans lequel, en option, le procédé comprend :
en réponse à la détermination (220) que le niveau d'activité d'UE dudit UE représente le premier niveau d'activité, l'adaptation des mesures d'UE à un premier niveau d'intensité ; et
en réponse à la détermination (220) que le niveau d'activité d'UE dudit UE représente le deuxième niveau d'activité, l'adaptation des mesures d'UE à un deuxième niveau d'intensité, dans lequel le deuxième niveau d'intensité est comparativement plus bas que le premier niveau d'intensité.

5. Procédé selon l'une quelconque des revendications 1 à 4, dans lequel le niveau de qualité comprend un niveau de précision des mesures d'UE, dans lequel, en option, le procédé comprend :
en réponse à la détermination que le niveau d'activité d'UE dudit UE représente le premier niveau d'activité, l'adaptation des mesures d'UE à un premier niveau de précision ; et
en réponse à la détermination que le niveau d'activité d'UE dudit UE représente le deuxième niveau d'activité, l'adaptation des mesures d'UE à un deuxième niveau de précision, dans lequel le deuxième niveau de précision est comparativement plus bas que le premier niveau de précision.

6. Procédé selon l'une quelconque des revendications 1 à 5, dans lequel le fait de déterminer (220) si le niveau d'activité d'UE dudit UE représente un premier niveau d'activité ou un deuxième niveau d'activité comprend :
la comparaison du niveau d'activité d'UE dudit UE avec un niveau d'activité seuil prédéfini ;
la détermination que le niveau d'activité d'UE représente le premier niveau d'activité en réponse au niveau d'activité d'UE dudit UE étant au-dessus du niveau d'activité seuil prédéfini (220) ; et
la détermination que le niveau d'activité d'UE représente le deuxième niveau d'activité en réponse au niveau d'activité d'UE dudit UE étant inférieur ou égal au niveau d'activité seuil prédéfini (220).

7. Appareil (600) pour commander de manière adaptative des mesures d'équipement utilisateur, UE, l'appareil comprenant un processeur (610) et une mémoire (620), dans lequel la mémoire (620) comprend des instructions exécutables par le processeur (610) moyennant quoi l'appareil est opérationnel pour :
déterminer si un UE est en mode connecté ou en mode repos ; et en réponse à la détermination que ledit UE est en mode connecté, l'appareil est en outre opérationnel pour :
déterminer si un niveau d'activité d'UE dudit UE représente un premier niveau d'activité ou un deuxième niveau d'activité, la détermination du niveau d'activité de l'UE incluant le fait de déterminer si l'UE est dans un état de canal dédié, DCH, ou un état de canal d'accès aller, FACH ; et
adapter un niveau de qualité auquel les mesures d'UE sont mises en oeuvre sur la base du niveau d'activité déterminé (220A, 220B).

8. Appareil (600) selon la revendication 7, dans lequel le premier niveau d'activité correspond à un haut niveau d'activité et le deuxième niveau d'activité correspond à un bas niveau d'activité ; et/ou dans lequel le premier niveau d'activité correspond à un état où une réception discontinue (DRX) n'est pas appliquée, et
le deuxième niveau d'activité correspond à un état où une réception discontinue est appliquée.

9. Appareil (600) selon l'une quelconque des revendications 7 ou 8, dans lequel la mémoire (620) comprend des instructions exécutables par le processeur (610) moyennant quoi l'appareil (600) est opérationnel pour :
en réponse à la détermination que le niveau d'activité d'UE dudit UE représente le premier niveau d'activité, adapter les mesures d'UE à un premier niveau de qualité correspondant à un premier niveau de performance (220A) ; et
en réponse à la détermination que le niveau d'activité d'UE dudit UE représente un deuxième niveau d'activité correspondant à un deuxième niveau de performance, adapter les mesures d'UE au deuxième niveau de qualité, dans lequel le deuxième niveau de qualité est comparativement plus bas que le premier niveau de qualité (220B) ;
dans lequel, en option, la mémoire (620) comprend des instructions exécutables par le processeur (610) moyennant quoi l'appareil (600) est opérationnel pour :
en réponse à la détermination que le niveau d'activité d'UE dudit UE représente le premier niveau d'activité, adapter les mesures d'UE à un premier niveau d'intensité ; et
en réponse à la détermination que le niveau d'activité d'UE dudit UE représente le deuxième niveau d'activité, adapter les mesures d'UE à un deuxième niveau d'intensité, dans lequel le deuxième niveau d'intensité est comparativement plus bas que le premier niveau d'intensité.

10. Appareil (600) selon l'une quelconque des revendications 7 à 9, dans lequel le premier ou deuxième niveau de qualité comprend un niveau d'intensité des mesures d'UE.

11. Appareil (600) selon l'une quelconque des revendications 7 à 10, dans lequel le niveau de qualité comprend un niveau de précision des mesures d'UE, dans lequel, en option, la mémoire (620) comprend des instructions exécutables par le processeur (610) moyennant quoi l'appareil (600) est opérationnel pour :
en réponse à la détermination que le niveau d'activité d'UE dudit UE représente le premier niveau d'activité, adapter les mesures d'UE à un premier niveau de précision ; et
en réponse à la détermination que le niveau d'activité d'UE dudit UE représente le deuxième niveau d'activité, adapter les mesures d'UE à un deuxième niveau de précision, dans lequel le deuxième niveau de précision est comparativement plus bas que le premier niveau de précision.

12. Appareil (600) selon l'une quelconque des revendications 7 à 11, dans lequel la mémoire (620) comprend des instructions exécutables par le processeur (610) moyennant quoi l'appareil (600) est opérationnel pour :
comparer un niveau d'activité d'UE avec un niveau d'activité seuil prédéfini ;
déterminer que le niveau d'activité d'UE représente le premier niveau d'activité en réponse au niveau d'activité d'UE dudit UE étant au-dessus du niveau d'activité seuil prédéfini (230A) ; et
déterminer que le niveau d'activité d'UE représente le deuxième niveau d'activité en réponse au niveau d'activité d'UE dudit UE étant inférieur ou égal au niveau d'activité seuil prédéfini (230B).

13. Appareil (600) selon l'une quelconque des revendications 7 à 12, l'appareil (600) étant ledit UE et dans lequel la mémoire (620) comprend des instructions exécutables par le processeur, moyennant quoi l'UE est opérationnel pour :
mettre en oeuvre des mesures d'UE au niveau de qualité adapté ; et
transmettre un message à un noeud de réseau, dans lequel ledit message comprend des informations ou indique autrement un résultat des mesures d'UE mises en oeuvre ; ou dans lequel l'appareil (600) est un noeud de réseau, et dans lequel la mémoire (620) comprend des instructions exécutables par le processeur (610) moyennant quoi l'UE est opérationnel pour :
transmettre un message audit UE, le message incluant une instruction à l'UE pour adapter le niveau de qualité auquel les mesures d'UE sont mises en oeuvre ; et
recevoir un message depuis l'UE, dans lequel ledit message comprend des informations ou indique autrement un résultat des mesures d'UE mises en oeuvre.

14. Programme informatique comprenant des instructions (510) qui, lorsqu'elles sont exécutées sur au moins un processeur (610) d'un appareil (600), amènent l'appareil (600) à mettre en oeuvre, ou à exécuter, un procédé selon l'une quelconque des revendications 1 à 6.

15. Porteuse contenant le programme d'ordinateur selon la revendication 14, la porteuse étant l'un parmi un signal électronique, un signal optique, un signal radio ou un support de stockage lisible par ordinateur.
